# FASCICULE DE BREVET EUROPEEN

(11) **EP 1 810 899 B1**
(45) Date de publication et mention de la délivrance du brevet: **25.03.2009**
(21) Numéro de dépôt: 07354004.9
(22) Date de dépôt: 16.01.2007
(51) Int. Cl.: B60S 9/08

(54) **Béquille de support pour véhicule-citerne**
Stütze für Tankwagen
Support stand for a tank vehicle

(30) Priorité: 20.01.2006 FR 0600532
(43) Date de publication de la demande: 25.07.2007
(73) Titulaire: Transports Goubet, 38360 Noyarey (FR)
(72) Inventeur: Amblard, Daniel, 38450 Vif (FR); Di Grazia, Jean-Christophe, 13800 Istres (FR); Mourier, Stéphanie, 38120 Saint-Egreve (FR)
(74) Mandataire: Hecké, Gérard

(56) Documents cités:
- US-A- 5 676 018
- US-A1- 2003 183 033
- US-A1- 2005 110 261

## Description

### Domaine technique de l'invention

L'invention concerne une béquille de support pour véhicule-citerne, comportant :
- un guide destiné à être fixé sous le véhicule-citerne,
- un coulisseau mobile dans le guide selon une direction longitudinale de coulissement sensiblement verticale,
- un socle d'appui au sol, relié au coulisseau,
- et des des moyens d'actionnement du coulisseau.

### État de la technique

De telles béquilles sont destinées à assurer la stabilité du véhicule-citerne lorsque le tracteur routier est dégagé. Pendant cette opération, la suspension arrière du tracteur routier est relevée ou abaissée par rapport à sa position normale de route. Le coulisseau est ensuite baissé grâce aux moyens d'actionnement jusqu'à ce que le socle d'appui soit en contact avec le sol. La suspension arrière du tracteur routier est ensuite abaissée pour permettre le dégagement de ce dernier, le véhicule-citerne reposant alors au sol sur ses roues arrières et sur sa béquille de support.

Les béquilles de support sont notamment utilisées dans les cas de ferroutage, lorsque les véhicules-citerne sont embarqués sur des moyens de transport par chemin de fer. Lors du transbordement des véhicules-citernes, la hauteur des béquilles doit être réglée pour que la hauteur totale des véhicules-citerne soit inférieure à une hauteur limite autorisée. Pour ce réglage, le tracteur routier positionne le véhicule-citerne sur une plate-forme de contrôle. Après positionnement, la suspension arrière du véhicule-citerne est abaissée. La suspension arrière du tracteur routier est ensuite abaissée et ajustée jusqu'à atteindre une hauteur totale du véhicule-citerne inférieure à la hauteur limite autorisée. Le réglage de la béquille est réalisé par abaissement de cette dernière jusqu'à venir en contact contre la plate-forme. La béquille étant réglée, la suspension arrière du tracteur routier est relevée pour décoller à nouveau la béquille et pour lui permettre de tracter le véhicule-citerne jusqu'à la zone d'embarquement. Après positionnement dans cette zone, le véhicule-citerne est déposé en appui sur la béquille réglée, par abaissement de la suspension arrière du tracteur routier.

Ainsi, le transbordement d'un véhicule-citerne sur un moyen de transport par chemin de fer nécessite un positionnement sur la plate-forme de contrôle, avec une immobilisation pour mener plusieurs actions sur la béquille et sur le tracteur routier utilisé. Ceci a pour conséquence de rendre le transbordement complexe, long et donc coûteux.

Une béquille tel que décrite dans le préambule de la 1^{ere} revendication est montré dans le document US-A-5 676 018.

### Objet de l'invention

L'invention a pour but de pallier aux inconvénients précédents en proposant une béquille de support pour véhicule-citerne facilitant son transbordement sur des moyens de transport par chemin de fer.

Selon l'invention, ce but est atteint par le fait que la béquille comporte un repère fixe solidaire du guide et un repère mobile solidaire du coulisseau, respectivement positionnés longitudinalement sur le guide et le coulisseau de sorte qu'une position alignée des repères fixe et mobile correspond à une hauteur prédéterminée de la béquille.

En pratique, la hauteur prédéterminée de la béquille est choisie pour que la hauteur totale du véhicule-citerne soit inférieure à la hauteur limite autorisée lorsque ladite béquille supporte ledit véhicule-citerne. Une béquille selon l'invention permet de régler sa hauteur directement dans la zone d'embarquement, sans passage par la plate-forme de contrôle. D'autre part, le réglage de la hauteur de la béquille est simplifié car il suffit d'aligner visuellement le repère mobile et le repère fixe par action sur les moyens d'actionnement.

Selon un développement de l'invention, la béquille comporte des moyens de réglage de la position longitudinale du repère fixe par rapport au guide. Cette caractéristique permet de modifier la hauteur prédéterminée de la béquille obtenue pour la position d'alignement des repères fixe et mobile, en fonction du type de véhicule-citerne sur lequel elle est montée.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente un véhicule-citerne courant équipé d'un exemple de béquille de support selon l'invention,
- la figure 2 est une vue de face de l'exemple de béquille de la figure 1, en position rétractée,
- la figure 3 est une vue de face de l'exemple de béquille de la figure 1, en position d'extension.

### Description de modes particuliers de réalisation

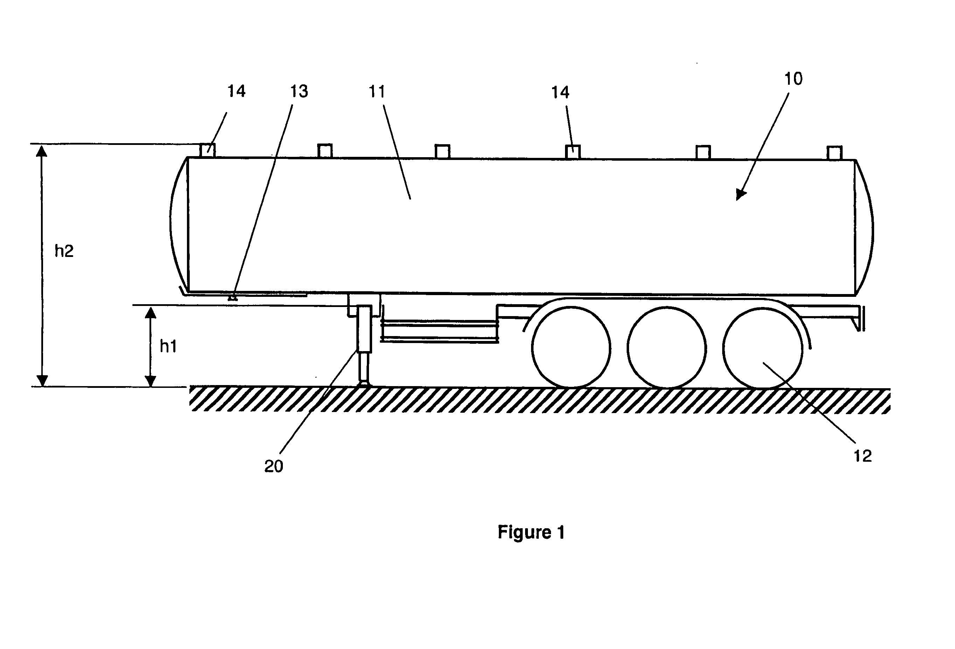

En référence à la figure 1, un véhicule-citerne 10 comporte classiquement une cuve cylindrique 11 disposée horizontalement et soutenue par plusieurs paires de roues 12. Un dispositif d'attache 13 à un tracteur routier est agencé à l'avant du véhicule-citerne 10. Des éléments rigidificateurs 14 sont rapportés en saillie au sommet de la cuve cylindrique 11. Sur la figure 1, le véhicule-citerne 10 n'est pas attaché à un tracteur routier, mais repose en appui sur une béquille 20 de support selon l'invention. La hauteur de la béquille 20 est repérée h1 tandis que la hauteur entre le sol et les éléments rigidificateurs 14 est repérée h2. La hauteur h2 correspond à la hauteur totale du véhicule-citerne 10.

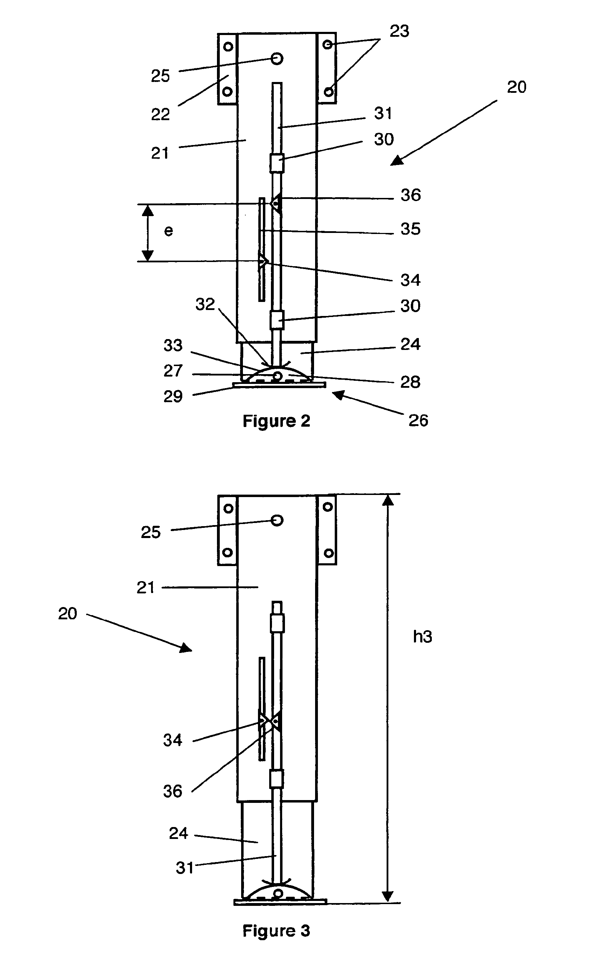

Les figures 2 et 3 représentent plus en détail la béquille 20, respectivement en position rétractée et en position d'extension. Celle-ci comporte un guide 21 de forme tubulaire à section transversale rectangulaire, destiné à être fixé verticalement au châssis du véhicule-citerne 10 sous la cuve cylindrique 11. A cet effet, le guide 21 présente sur deux faces extérieures opposées des pattes de fixation 22 munies chacune de deux trous 23 pour le passage de vis (non représentées) coopérant avec le châssis du véhicule-citerne 10.

Dans le guide 21 est monté un coulisseau 24 de forme allongée selon une direction qui, en service, est sensiblement verticale. Le coulisseau 24 possède une section transversale rectangulaire telle que le montage présente un jeu latéral de coulissement entre les faces intérieures du guide 21.

Pour créer le mouvement relatif entre le guide 21 et le coulisseau 24, une vis sans fin est montée à rotation dans le coulisseau 24, en étant fixe axialement par rapport au guide 21. Sur cette vis est engagé un écrou solidaire du coulisseau 24. Elle porte à son extrémité supérieure un pignon conique en prise avec un pignon conique fixé à l'extrémité d'un arbre de sortie d'un réducteur. Ce dernier est entraîné, à l'entrée, par un arbre d'entrée 25 s'étendant transversalement en faisant saillie à l'extérieur du guide 21. L'arbre d'entrée 25 est entraîné en rotation sous l'action d'une manivelle (non représentée). Néanmoins, tout autre mécanisme de transmission intercalé entre la manivelle et la vis sans fin peut être envisagé. Plus généralement, tout autre moyen d'actionnement du coulisseau 24 (pneumatique, hydraulique...) peut être mis en ceuvre sans sortir du cadre de l'invention.

L'extrémité inférieure supporte un socle d'appui 26 monté à pivotement autour d'un axe transversal 27 perpendiculaire à la direction longitudinale de coulissement du coulisseau 24. Dans la variante de réalisation représentée, deux parois latérales 28 verticales s'étendent dans le plan de pivotement du socle d'appui depuis une plaque de pied 29. L'axe transversal 27 s'étend entre les parois latérales 28 en traversant le coulisseau 24. La possibilité de pivotement du socle d'appui 26 sert à compenser les irrégularités du sol afin d'empêcher une sollicitation désaxée de la béquille 20.

L'une des faces extérieures du guide 21 dépourvue de patte de fixation 22, présente en saillie, deux éléments de guidage 30 d'une tige coulissante 31 en appui sur le socle d'appui 26. Les éléments de guidage sont rapportés par soudage pour être coaxiaux selon un axe vertical. La tige coulissante 31 est donc mobile par rapport au guide 21 selon une direction de coulissement parallèle à celle du coulisseau 24.

L'extrémité inférieure de la tige coulissante 31 comporte un taquet convexe 32 en contact avec le bord supérieur de l'une des parois latérales 28 du socle d'appui 26. Ledit bord supérieur présente un profil arrondi pour constituer une portion d'appui 33 en forme de dôme présentant une courbure inversée par rapport au taquet convexe 32. La coopération entre le taquet convexe 32 et la portion d'appui 33 garantit le maintien constant et fiable de la tige coulissante 31 quelle que soit l'inclinaison du socle d'appui 26.

Conformément à l'invention, la face extérieure du guide 21 supportant la tige coulissante 31, comporte également un repère fixe 34 visible depuis l'extérieur. Le repère fixe 34 est fixé par tout moyen approprié, par exemple par soudage, et peut se translater verticalement le long d'une glissière 35 parallèle à la tige coulissante 31. La glissière 35 autorise le réglage de la position longitudinale du repère fixe 34 par rapport au guide 21. Le repère fixe 34 est destiné à coopérer avec un repère mobile 36 fixé sur la tige coulissante 31.

En position rétractée (figure 2), les repères fixe 34 et mobile 36 ne sont pas alignés. Le décalage « e » (figure 2) entre les repères fixe 34 et mobile 36 est choisi de telle manière que la hauteur h1 de la béquille 20 soit égale à une hauteur prédéterminée h3 lorsque les repères fixe 34 et mobile 36 sont alignés (figure 3). La valeur de « e » est déterminée par le positionnement longitudinal des repères fixe 34 et mobile 36 respectivement sur le guide 21 et sur le coulisseau 24, et peut donc être modifiée grâce à la glissière 35 en fonction du type de véhicule-citerne 10 sur lequel la béquille 20 est montée. En pratique, la hauteur prédéterminée h3 de la béquille 20 est choisie pour que la hauteur totale h2 du véhicule-citerne 10 soit inférieure à la hauteur limite autorisée lorsque la béquille 20 supporte le véhicule-citerne 10.

Pour le transbordement du véhicule-citerne 10 sur un moyen de transport par chemin de fer, le tracteur routier positionne le véhicule-citerne 10 directement dans la zone d'embarquement, sans passage par la plate-forme de contrôle. Après positionnement, la suspension arrière du tracteur routier est relevée, la béquille 20 étant alors en position rétractée (figure 2) correspondant à la position de la béquille 20 lorsque le tracteur routier est en position normale de route. L'opérateur actionne alors la manivelle afin d'abaisser le coulisseau 24. Pendant la sortie du coulisseau 24, le repère mobile 36, positionné au dessus du repère fixe 34 en position rétractée de la béquille 20, se rapproche du repère fixe 34 par un mouvement correspondant de la tige coulissante 31. L'opérateur abaisse le coulisseau 24 jusqu'à ce que le socle d'appui 26 vienne en contact avec le sol. Pendant ce mouvement, le repère mobile 36 s'abaisse en dessous du repère fixe 34. La hauteur h1 de la béquille 20 est donc supérieure à la hauteur prédéterminée h3. La suspension arrière du tracteur routier est ensuite abaissée pour permettre le dégagement de ce dernier.

Le véhicule-citerne 10 est alors supporté à l'avant par la béquille 20. Comme le repère mobile 36 est en dessous du repère fixe 34, la hauteur totale h2 dépasse la hauteur limite autorisée. Il suffit alors à l'opérateur de manoeuvrer la manivelle pour rentrer le coulisseau 24 dans le guide 21 jusqu'à la position alignée des repères fixe 34 et mobile 36 (figure 3). Après cet ajustement de la hauteur h1 de la béquille 20 à sa valeur prédéterminée h3, la hauteur totale h2 du véhicule-citerne 10 est inférieure à la hauteur maximale autorisée pour les cas de transbordement sur des moyens de transport par chemin de fer.

Une béquille 20 selon l'invention permet ainsi un réglage simplifié de la hauteur h1 de la béquille 20, car il suffit d'aligner visuellement le repère mobile 34 et le repère fixe 36 par action sur les moyens d'actionnement du coulisseau 24. D'autre part, le réglage de la hauteur totale h2 du véhicule-citerne 10 peut être réalisé directement dans la zone d'embarquement, sans passage par la plate-forme de contrôle.

## Revendications

1. Béquille (20) de support pour véhicule-citerne (10), comportant :
- un guide (21) destiné à être fixé sous le véhicule-citerne (10),
- un coulisseau (24) mobile dans le guide (21) selon une direction longitudinale de coulissement sensiblement verticale,
- un socle d'appui (26) au sol, relié au coulisseau (24),
- des moyens d'actionnement du coulisseau (24),
**caractérisée en ce qu'**elle comporte un repère fixe (34) solidaire du guide (21) et un repère mobile (36) solidaire du coulisseau (24), respectivement positionnés longitudinalement sur le guide (21) et sur le coulisseau (24) de sorte qu'une position alignée des repères fixe (34) et mobile (36) correspond à une hauteur prédéterminée (h3) de la béquille (20).

2. Béquille (20) selon la revendication 1, **caractérisée en ce qu'**elle comporte des moyens de réglage (25) de la position longitudinale du repère fixe (34) par rapport au guide (21).

3. Béquille (20) selon l'une des revendications 1 ou 2, **caractérisée en ce que** le repère mobile (36) est fixé sur une tige coulissante (31) en appui sur le socle d'appui (26) et mobile par rapport au guide (21) selon une direction de coulissement parallèle à celle du coulisseau (24).

4. Béquille (20) selon l'une quelconque des revendications 1 à 3, **caractérisée en ce que** le socle d'appui (26) est monté à pivotement par rapport au coulisseau (24) selon un axe transversal perpendiculaire à la direction longitudinale de coulissement du coulisseau (24).

5. Béquille (20) selon les revendications 3 et 4, **caractérisée en ce que** l'extrémité inférieure de la tige coulissante (31) comporte un taquet convexe (32) destiné à coopérer avec une portée d'appui (33) de courbure inversée agencée sur le socle d'appui (26).

6. Béquille (20) selon l'une quelconque des revendications 1 à 5, **caractérisée en ce que** les moyens d'actionnement du coulisseau (24) comportent un écrou solidaire du coulisseau (24), coopérant avec une vis sans fin entraînée en rotation sous l'action d'une manivelle par l'intermédiaire d'un mécanisme de transmission.

## Claims

1. A support stand (20) for a tank vehicle (10), comprising:
- a guide (21) designed to be fixed under the tank vehicle (10),
- a slide (24) movable in the guide (21) in a substantially vertical longitudinal sliding direction,
- a pressing base (26) resting on the ground and connected to the slide (24),
- means for actuating the slide (24),
**characterized in that** it comprises a fixed marker (34) securedly attached to the guide (21) and a mobile marker (36) securedly attached to the slide (24), respectively positioned longitudinally on the guide (21) and on the slide (24) in such a way that an aligned position of the fixed marker (34) and mobile marker (36) corresponds to a predefined height (h3) of the stand (20).

2. The stand (20) according to claim 1, **characterized in that** it comprises means (25) for adjusting the longitudinal position of the fixed marker (34) with respect to the guide (21).

3. The stand according to one of claims 1 or 2, **characterized in that** the mobile marker (36) is fixed on a sliding rod (31) pressing on the pressing base (26) and movable with respect to the guide (21) in a sliding direction parallel to that of the slide (24).

4. The stand (20) according to any one of claims 1 to 3, **characterized in that** the pressing base (26) is mounted pivoting with respect to the slide (24) along a transverse axis perpendicular to the longitudinal sliding direction of the slide (24).

5. The stand (20) according to claims 3 and 4, **characterized in that** the bottom end of the sliding rod (31) comprises a convex pin (32) designed to operate in conjunction with a bearing surface (33) of reverse curvature arranged on the pressing base (26).

6. The stand (20) according to any one of claims 1 to 5, **characterized In that** the means for actuating the slide (24) comprise a nut securedly attached to the slide (24) and operating in conjunction with an endless screw driven in rotation by the action of a crank via a transmission mechanism.

## Patentansprüche

1. Stütze (20) für Tankwagen (10), die umfasst:
- ein Führungsgehäuse (21), das dazu bestimmt ist, unter dem Tankwagen (10) befestigt zu werden,
- einen Schlitten (24), der in dem Führungsgehäuse (21) in einer im Wesentilchen vertikalen Längsgleitrichtung beweglich ist,
- einen Auflagesockel (26) zum Aufliegen auf dem Boden, der mit dem Schlitten (24) verbunden ist,
- Betätigungsmittel für den Schlitten (24),
**dadurch gekennzeichnet, dass** sie einen festen Bezugspunkt (34) umfasst, der mit dem Führungsgehäuse (21) fest verbunden Ist, sowie einen beweglichen Bezugspunkt (36), der fest mit dem Schlitten (24) verbunden ist, die jeweils längs am Führungsgehäuse (21) und am Schlitten (24) so positioniert sind, dass eine aufeinander ausgerichtete Position des festen Bezugspunkts (34) und des beweglichen Bezugspunkts (36) einer vorbestimmten Höhe (h3) der Stütze (20) entspricht.

2. Stütze (20) nach Anspruch 1, **dadurch gekennzeichnet, dass** sie Einsteilmittel (25) zum Einstellen der Längsposition des festen Bezugspunkts (34) bezogen auf das Führungsgehäuse (21) umfasst.

3. Stütze (20) nach einem der Ansprüche 1 oder 2, **dadurch gekennzeichnet, dass** der bewegliche Bezugspunkt (36) an einer Gleitstange (31) angebracht ist, die auf dem Auflagesockel (26) aufliegt und bezüglich dem Führungsgehäuse (21) in einer zu derjenigen des Schlittens (24) parallelen Gleitrichtung verfahrbar ist.

4. Stütze (20) nach einem der Ansprüche 1 bis 3, **dadurch gekennzeichnet, dass** der Auflagesockel (26) schwenkbar bezüglich dem Schlitten (24) entsprechend einer Querachse montiert ist, die lotrecht zur Längsgleitrichtung des Schlittens (24) ist.

5. Stütze (20) nach den Ansprüchen 3 und 4, **dadurch gekennzeichnet, dass** das untere Ende der Gleitstange (31) einen konvexen Anschlag (32) umfasst, der dazu vorgesehen ist, mit einer Auflagefläche (33) mit umgedrehter Krümmung zusammenzuwirken, die auf dem Auflagesockel (26) angeordnet ist.

6. Stütze (20) nach einem der Ansprüche 1 bis 5, **dadurch gekennzeichnet, dass** die Betätigungsmittel für den Schlitten (24) eine Mutter umfassen, die fest mit dem Schlitten (24) verbunden ist und mit einer Schnecke zusammenwirkt, die durch Wirkung einer Kurbel mittels eines Übertragungsmechanismus drehend angetrieben wird.
